Europäisches Patentamt

European Patent Office

Office européen des brevets

(11) Veröffentlichungsnummer: **0 015 019**
**A1**

## (12) EUROPÄISCHE PATENTANMELDUNG

(21) Anmeldenummer: **80200095.0**

(22) Anmeldetag: **05.02.80**

(51) Int. Cl.³: **C 22 C 11/08**
**H 01 M 4/68**

(30) Priorität: **23.02.79 DE 2907227**

(43) Veröffentlichungstag der Anmeldung:
**03.09.80 Patentblatt 80/18**

(84) Benannte Vertragsstaaten:
**AT BE DE FR GB IT NL**

(71) Anmelder: **METALLGESELLSCHAFT AG**
**Reuterweg 14 Postfach 3724**
**D-6000 Frankfurt/M.1(DE)**

(72) Erfinder: **Nann, Eberhard, Dr.**
**Schmückersweg 2**
**D-4770 Soest-Deiringsen(DE)**

(72) Erfinder: **Heubner, Ulrich, Dr.**
**Gartenfeldstrasse 69d**
**D-638 Bad Homburg v.d.H.(DE)**

(74) Vertreter: **Fischer, Ernst, Dr.**
**Reuterweg 14**
**D-6000 Frankfurt am Main 1(DE)**

(54) **Antimonarme Bleilegierung.**

(57) Um bei antimonarmen Bleilegierungen für Massetträger-gitter von Bleiakkumulatoren Wartungsfreiheit, Selbstentla-stungssicherheit, Zyklenfestigkeit und gute Verarbeitbarkeit im optimaler Weise mit einander zu verbinden, enthält die Bleilegierung 0,05 bis 1,5 % Antimon.

EP 0 015 019 A1

Croydon Printing Company Ltd.

- 1 -

METALLGESELLSCHAFT                                22.02.1979
Aktiengesellschaft                                -DRQ/GKP-
Reuterweg 14
6000 Frankfurt (Main) 1


Prov. Nr. 8383 M


Antimonarme Bleilegierung
----------------------------


Die Erfindung betrifft eine antimonarme Bleilegierung
zur Herstellung von Masseträgergittern für Bleiakkumulatoren.


Es ist üblich, die Gitter von Bleiakkumulatoren im
allgemeinen aus einer Pb-Sb-Legierung mit einem Antimongehalt von 4 bis 11 % herzustellen. Hierbei erfüllt das
Antimon die Aufgabe, dem von Haus aus sehr weichen und
für eine Verarbeitung von Akkumulatorengittern nicht
verwendbaren Reinblei die erforderliche Festigkeit und
Gießfähigkeit zu verleihen. Das Antimon in diesen
Legierungen ist ein Zusatz, der die Herstellung der
Gitter aufgrund seiner hohen Kosten jedoch merklich
verteuert. Außerdem steigt die Selbstentladung des

- 2 -

Akkumulators mit steigendem Antimongehalt an. Weiterhin erhöht sich mit steigendem Antimongehalt die Gasentwicklung, und die Wanderung von Antimonionen zur negativen Elektrode des Akkumulators führt im Betrieb zu einer Vergiftung dieser Elektrode.

Aus diesen Gründen hat man sich bemüht, den Antimongehalt der Gitter für Bleiakkumulatoren soweit wie möglich herabzusetzen.

Es gelangen untereutektische Blei-Antimon-Legierungen mit einem Antimongehalt von 1,5 bis 3,5 % zur Anwendung, die noch 0,025 bis 0,2 % Arsen, 0,005 bis 0,1 % Selen und 0,01 bis 0,05 % Zinn enthalten (DE-PS 21 51 733). Die aus einer solchen Blei-Antimon-Legierung hergestellten Gitter für Starterakkumulatoren erfordern keine Wartung, d.h. kein Nachfüllen von Wasser während ihrer Lebensdauer. Darüber hinaus weisen diese Gitter eine brauchbare Zyklenfestigkeit auf, was bedeutet, daß sich beim zyklischen Lade-/Entladebetrieb keine isolierenden Deckschichten zwischen Gitter und positiver Masse bilden, die eine Entladung der Platte erschweren oder im Grenzfall unmöglich machen. Aus der DE-PS 24 39 729 ist bekannt, daß sich die Zyklenfestigkeit der vorgenannten antimonarmen Bleilegierungen durch den Zusatz von Zinn beispielsweise in der Höhe von 0,05 bis 0,5 % noch weiter verbessern läßt. Die aus einer solchen antimonarmen zinnhaltigen Bleilegierung hergestellten Akkumulatorengitter besitzen jedoch eine verhältnismäßig große Selbstentladung, die ein Nachladen des Akkumulators bei längerer Außerbetriebnahme erfordert. Das trifft insbesondere für neue Kraftfahrzeuge zu, die längere Zeit auf Käufer warten müssen oder die über größere Entfernungen verschifft werden.

Es ist die Aufgabe der vorliegenden Erfindung, eine Bleilegierung für Akkumulatoren zu entwickeln, bei der Wartungsfreiheit, Selbstentladungssicherheit, Zyklenfestigkeit und gute Verarbeitbarkeit in optimaler Weise miteinander verbunden sind.

Die Lösung dieser Aufgabe besteht in einer antimonarmen Bleilegierung mit 0,05 bis 1,5 %, vorzugsweise 0,4 bis 0,5 % Antimon, Rest Blei und herstellungsbedingten Verunreinigungen.

Die erfindungsgemäße Bleilegierung enthält zur Kornfeinung Zusätze von 0,005 bis 0,1 % Selen, wodurch diese direkt zu Gittern warmrißfrei vergossen oder über gewalztes Band zu Streckmetallgittern verarbeitet werden.

Die Festigkeit und Härte der Gitter kann bei Bedarf durch Zusätze von 0,02 bis 0,5 % Arsen verbessert werden, wobei der Arsengehalt von gegossenen Gittern vorzugsweise 0,08 bis 0,15 % und von Knet- bzw. Streckmetallgittern 0,04 bis 0,06 % beträgt.

Im Rahmen der weiteren Ausgestaltung der Erfindung ist das Selen durch 0,002 bis 0,012 %, vorzugsweise 0,002 bis 0,006 %, Schwefel ersetzt. Dadurch ergibt sich nicht nur der Vorteil eines geringeren Preises, sondern insbesondere eine geringere Giftigkeit gegenüber Selen, da der MAK-Wert des Selens nur 1/10 von demjenigen des Schwefels beträgt. Darüber hinaus ist die für die gewünschte Wirkung benötigte Schwefelmenge geringer als die entsprechende Menge an Selen. Das ist sowohl für die Herstellung und Verarbeitung als auch für die Wiederverarbeitung des Akkumulatorenschrotts von großer Bedeutung. Hinsichtlich der Gießbarkeit wirkt der Schwefel in Gegenwart von 0,01 bis 0,1 %, vorzugsweise 0,015 bis 0,06 %, Kupfer wie Selen und vermag es hier in voll befriedigender Weise zu substituieren. Ein weiterer Vorteil des Kupfers besteht darin, daß dieses die Verkrätzung der zu vergießenden Schmelze vermindert. Von Vorteil ist fernerhin, wenn die erfindungsgemäße Legierung noch 0,010 bis 0,1 %, vorzugsweise 0,03 bis 0,06 %, Silber enthält.

Wenn Schwierigkeiten mit der Vergießbarkeit der erfindungsgemäßen Bleilegierung auftreten sollten, kann diesen durch den Zusatz von 0,002 bis 0,5 % Zinn abgeholfen werden.

Herstellungsbedingt enthält die Bleilegierung bis 300 g/t Wismut mit festigkeitssteigender Wirkung.

Ausführungsbeispiel
--------------------

Die Bleilegierung der Zusammensetzung

| | | | |
|---|---|---|---|
| 0,5 | bis | 0,7 | Masse-% Antimon |
| 0,09 | bis | 0,12 | Masse-% Arsen |
| 400 | bis | 500 | g/t Kupfer |
| 40 | bis | 60 | g/t Schwefel |
| 200 | bis | 250 | g/t Wismut |
| 80 | bis | 100 | g/t Zinn |

wurde zu Starterbatteriegittern vergossen. Die mit diesen hergestellten Batterien zeigten gute Starteigenschaften und hervorragenden Korrosionswiderstand bei zyklischer und Überlade-Beanspruchung.

Die mit der erfindungsgemäßen antimonarmen Bleilegierung für Akkumulatoren erzielten Vorteile bestehen darin, daß damit die Realisierung von selbstentladungssicheren, wartungsfreien und zugleich zyklenfesten Akkumulatoren erstmalig möglich ist. Darüber hinaus werden die bei Blei-Erdalkalimetall-Legierungen auftretenden Verarbeitungsschwierigkeiten, insbesondere der Abbrand, grundsätzlich vermieden.

PATENTANSPRÜCHE
----------------

1. Antimonarme Bleilegierung zur Herstellung von Masseträgergittern für Akkumulatoren, gekennzeichnet durch einen Antimongehalt von 0,05 bis 1,5 %, Rest Blei, mit herstellungsbedingten Verunreinigungen.

2. Bleilegierung nach Anspruch 1, die 0,4 bis 0,5 % Antimon enthält.

3. Bleilegierung nach den Ansprüchen 1 und 2, die zusätzlich noch 0,02 bis 0,5 % Arsen enthält.

4. Bleilegierung nach Anspruch 3, dadurch gekennzeichnet, daß der Arsengehalt für gegossene Gitter 0,08 bis 0,15 % und für durch Kneten hergestellte Gitter 0,04 bis 0,06 % beträgt.

5. Bleilegierung nach einem oder mehreren der Ansprüche 1 bis 4, die zusätzlich noch 0,005 bis 0,1 % Selen enthält.

6. Bleilegierung nach Anspruch 5, bei der das Selen durch 0,002 bis 0,012 %, vorzugsweise 0,002 bis 0,006 %, Schwefel ersetzt ist.

7. Bleilegierung nach einem oder mehreren der Ansprüche 1 bis 6, die zusätzlich noch 0,01 bis 0,1 %, vorzugsweise 0,015 bis 0,06 %, Kupfer enthält.

8. Bleilegierung nach einem oder mehreren der Ansprüche 1 bis 7, die zusätzlich noch 0,010 bis 0,1 %, vorzugsweise 0,03 bis 0,06 %, Silber enthält.

9. Bleilegierung nach einem oder mehreren der Ansprüche 1 bis 8, die zusätzlich noch 0,002 bis 0,5 % Zinn enthält.

10. Bleilegierung nach einem oder mehreren der Ansprüche 1 bis 9, die herstellungsbedingt bis zu 300 g/t Wismut als Verunreinigung enthält.

0015019

Europäisches
Patentamt

**EUROPÄISCHER RECHERCHENBERICHT**

Nummer der Anmeldung

EP 80 20 0095

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| X | DE - A - 2 403 849 (METALLGESELL- SCHAFT A.G.) <br> * Ansprüche 1,4-6 * <br> -- | 1,3,5-9 |
| X | US - A - 2 694 628 (CARROLL) <br> * Ansprüche 1,2; Seite 1, Spalte 1, Zeilen 15-35 * <br> -- | 1-3,7-9 |
| X | GB - A - 622 512 (WATERHOUSE et al.) <br> * Ansprüche 1,3; Seite 2, Zeilen 59-89, 93-100 * <br> -- | 1,5,9 |
| X | DE - A - 2 337 708 (ACCUMULATOREN- FABRIKEN WILHELM HAGEN A.G.) <br> * Ansprüche 1,3 * <br> -- | 1,3,6,7,9 |
| X | DE - A - 2 621 398 (ACCUMULATOREN- FABRIKEN WILHELM HAGEN A.G.) <br> * Ansprüche 1,2,4 * <br> -- | 1,5,6,9 |
| X | FR - A - 2 278 779 (SOCIETE FULMEN ET COMPAGNIE EUROPEENNE D'ACCUMU- LATEURS) <br> * Ansprüche 1,2,5 * <br> -- | 1,3,8,9 |
| | DE - B - 1 193 253 (STOLBERGER ZINK A.G. FUR BERGBAU UND HUTTEN- BETRIEB) <br> * Anspruch 1; Spalte 3, Zeilen 27-39 * | 1,3, |

**KLASSIFIKATION DER ANMELDUNG (Int.Cl. ³)**

C 22 C 11/08
H 01 M 4/68

**RECHERCHIERTE SACHGEBIETE (Int. Cl. ³)**

C 22 C 11/08
H 01 M 4/68

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-04-1980 | LIPPENS |

EPA form 1503.1 06.78

Europäisches
Patentamt

## EUROPÄISCHER RECHERCHENBERICHT

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A - 2 412 321 (ELECTRIC POWER STORAGE LTD.)<br><br>* Anspruch 1; Seite 3, Tabelle I, Legierungen Nr. 5-8 *<br><br>-- | 1,3,5, 7 | |
| D | DE - A - 2 439 729 (VARTA BATTERIE A.G.)<br><br>* Ansprüche 1,2,4 *<br><br>---- | 1,3,5, 9 | |
| | | | RECHERCHIERTE SACHGEBIETE (Int. Cl. 3) |